# FASCICULE DE BREVET EUROPEEN

(11) **EP 0 650 789 B1**
(45) Date de publication et mention de la délivrance du brevet: **20.05.1998**
(21) Numéro de dépôt: 94470032.7
(22) Date de dépôt: 28.09.1994
(51) Int. Cl.: B22D 11/06

(54) **Cylindre de coulée d'une installation de coulée continue sur un ou entre deux cylindres**
Giesswalze zum kontinuierlichen Giessen mit einer oder zwei Giesswalzen
Castingroll for continuous casting with one or two rolls

(30) Priorité: 27.10.1993 FR 9312983
(43) Date de publication de la demande: 03.05.1995
(73) Titulaire: USINOR, 92800 Puteaux (FR); Thyssen Stahl Aktiengesellschaft, 47166 Duisburg (DE)
(72) Inventeur: Delassus, Pierre, F-62400 Locon (FR); Legrand, Hugues, F-62330 Molinghem (FR); Raisson, Gérard, F-58000 Nevers (FR); Di Fant, Marc, F-78300 Poissy (FR); Barbe, Jacques, F-42100 Saint Etienne (FR); Mazodier, François, F-42100 Saint Etienne (FR)
(74) Mandataire: Ventavoli, Roger

(56) Documents cités:
- EP-A- 0 428 464
- PATENT ABSTRACTS OF JAPAN vol. 4, no. 147 (M-36) (629) 16 Octobre 1980 & JP-A-55 100 854 (HITACHI SEISAKUSHO K.K.) 1 Août 1980

## Description

L'invention concerne la coulée continue de métaux, notamment de l'acier, sur un ou entre deux cylindres, et plus particulièrement la constitution d'un cylindre d'une installation de coulée continue selon la technique précitée.

On sait que, dans le but d'obtenir directement par coulée de métal en fusion des produits métalliques de faible épaisseur, tels que des bandes minces d'une épaisseur de quelques millimètres, notamment en acier, s'est développé une technique particulière de coulée, appelée couramment coulée continue entre cylindres. Cette technique consiste à déverser du métal en fusion dans un espace de coulée formé entre deux cylindres refroidis d'axes parallèles et deux parois d'obturation latérales généralement disposées contre les surfaces frontales d'extrémité des cylindres. Le métal se solidifie au contact des parois des cylindres, et par rotation de ceux-ci en sens contraire, ou extrait une bande métallique, au moins partiellement solidifiée, dont l'épaisseur est sensiblement égale à la distance séparant les deux cylindres. Cette technique permet d'obtenir, directement à partir du métal en fusion, des bandes minces de métal, en particulier en acier.

La faible épaisseur de ces bandes permet de les laminer ensuite directement par un laminage à froid.

On connaît aussi une autre technique de coulée, destinée à obtenir des produits encore plus minces, selon laquelle le métal liquide, déversé sur la surface d'un seul cylindre entraîné en rotation, se solidifie entièrement au contact du cylindre pour former une bande métallique continue.

Les cylindres utilisés pour la mise en oeuvre de ces techniques de coulée sont généralement refroidis intérieurement et comportent un moyeu et une virole disposés coaxialement, des moyens de liaison axiale et en rotation de la virole sur le moyeu et des moyens de support et de centrage de la virole sur le moyeu.

De tels cylindres sont décrits par exemple dans le document FR-A- 2 654 312. Ce document décrit un cylindre comportant un moyeu supportant une virole en matériau bon conducteur de la chaleur, par exemple un alliage de cuivre. La virole comporte des canaux de circulation d'un fluide de refroidissement et est maintenue sur le moyeu, dans une zone axialement médiane, par un assemblage mécanique en "T" ou en queue d'aronde qui assure le positionnement axial de la virole sur le moyeu et la transmission du mouvement de rotation du moyeu à la virole. Ce mode d'assemblage est aussi destiné à empêcher la virole de s'écarter radialement du moyeu sous l'effet de la dilatation thermique. Pour empêcher les effets de cette dilatation sur les bords de la virole, ceux-ci sont également maintenus par des flasques annulaires agencés de manière à empêcher un déplacement radial des bords, tout en autorisant leur déplacement dans la direction axiale.

Une telle disposition conduit toutefois à réaliser la virole sous forme d'une pièce massive, pour pouvoir assurer son assemblage sur le moyeu, ce qui rend cette pièce coûteuse, d'autant plus que les usinages nécessaires pour son système d'assemblage et de maintien sur le moyeu, doivent être réalisés avec une grande précision. De plus, le système d'assemblage en "T" ou en queue d'aronde conduit à ce que la virole soit très épaisse dans sa partie médiane et plutôt mince vers ses bords ; ces variations importantes de section conduisent à ce que la virole se déforme irrégulièrement lors de sa dilatation.

D'autres modes de réalisation des cylindres ont été proposés. Par exemple, le document JP-A-04 224054 montre un cylindre constitué d'une virole et de deux demi-moyeux. L'alésage de la virole est biconique, et les demi-moyeux présentent une conicité complémentaire à celle des alésages de la virole qu'ils supportent sur sensiblement toute sa largeur. Les moyeux sont reliés entre eux par des organes de liaison élastiques, agissant selon la direction axiale du cylindre pour maintenir le contact de la virole sur les moyeux, même lorsque la virole se dilate radialement. L'objectif visé par ce mode de réalisation est d'empêcher la perte du contact entre virole et moyeu sous l'effet des déformations thermiques cycliques de la virole. Dans une telle disposition, l'entraînement de la virole par les moyeux se fait par frottement aux niveaux des surfaces coniques, et il n'est pas exclu que, sous l'effet des dilatations radiales et axiales variables selon la circonférence, se produisent des pertes de contact et donc des risques de mauvais entraînement, ce problème étant considérablement aggravé si la virole subit un bombé thermique.

De plus, dans cette réalisation, le maintien du positionnement de la virole, selon la direction axiale du cylindre, est soumis à un déplacement symétrique des demi-moyeux. Si ces déplacements ne sont pas parfaitement symétriques, il en résulte un déplacement axial de la virole par rapport à sa position d'origine. Un tel déplacement est préjudiciable à l'étanchéité nécessaire entre les bords de la virole et les parois d'obturation latérale de l'espace de coulée, lesquelles parois doivent assurer l'étanchéité de l'espace de coulée, aux extrémités des cylindres, par contact avec les surfaces frontales d'extrémité de la virole.

En effet, on comprendra aisément que, dans une installation de coulée entre deux cylindres, si les déplacements axiaux des viroles des deux cylindres ne sont pas identiques, il n'est pas possible de conserver le contact nécessaire de la paroi d'obturation avec les bords des viroles.

De manière générale, il a été constaté que notamment sous l'effet des dilatations thermiques, les viroles des cylindres ont tendance à se déformer et si la fixation des viroles sur les cylindres n'est pas assurée de manière optimale, il en résulte, notamment sous l'effet des forces de pression exercées par le produit métallique lors de la coulée, des perturbations dans la rotation des viroles qui ne se fait plus de manière parfaitement régulière et circulaire, et se traduit par un phénomène de "faux rond". Ces perturbations peuvent nuire gravement à la qualité du produit coulé, en générant à sa surface des défauts géométriques ou métallurgiques.

D'autre part, si le supportage et le centrage de la virole ne sont pas assurés par les mêmes pièces quelque soit l'état de dilatation de la virole, l'usinage du profil de la virole effectué à froid de façon parfaitement concentrique à l'axe de rotation, peut se révéler excentré à chaud du fait du changement des appuis.

La présente invention a pour but de résoudre les problèmes précités et notamment de proposer un mode de réalisation économique des cylindres de coulée, et plus particulièrement de leurs viroles qui sont des pièces susceptibles d'usure et doivent être aisément interchangeables et réalisables à moindre coût pour une économie de matière et d'usinage.

L'invention a aussi pour buts d'assurer aussi bien lorsque les cylindres sont froids que à chaud, pendant la coulée, un supportage continu et constant de la virole et en particulier :
- garantir un bon centrage axial et radial de la virole sur le moyeu,
- assurer la meilleure symétrie possible par rapport à un plan médian du cylindre, orthogonal à son axe,
- assurer un entraînement régulier de la virole par le moyeu, et une transmission constante du couple malgré les éventuelles déformations de la virole,
- limiter les contraintes dans la virole et le moyeu, même lors des déformations par dilatation,
- assurer le maintien des bords de la virole lorsque celle-ci subit un bombé thermique.
- garantir la concentricité à l'axe de rotation de l'usinage du profil de la virole à froid comme à chaud.

Avec ces objectifs en vue, l'invention a pour objet un cylindre de coulée pour une installation de coulée continue des métaux sur un ou entre deux tels cylindres, ce cylindre comportant un moyeu et une virole disposés coaxialement, des moyens de liaison de la virole et du moyeu, comprenant des moyens de liaison axiale, et des moyens de liaison en rotation, et des moyens de support et de centrage radial de la virole sur le moyeu.

Selon l'invention, le cylindre est caractérisé en ce que les moyens de liaison axiale comportent des moyens de butée axiale de la virole sur le moyeu, situés dans un plan sensiblement axialement médian du cylindre, et les moyens de centrage comportent des moyens de centrage conique élastique uniquement des bords de la virole par rapport au moyeu.

Grâce à l'invention, le centrage axial et radial de la virole par rapport au moyeu est assuré par les mêmes pièces, quel que soit l'état de dilatation de la virole. En effet, les moyens de butée axiale étant situés dans le plan médian du cylindre, les déformations de dilatation de la virole dans la direction axiale se répartissent également de part et d'autre de ce plan, ce qui garantit un positionnement précis et fixe de la virole, et donc une symétrie optimale des surfaces de coulée par rapport au dit plan médian.

Par ailleurs, les moyens de centrage conique assurent le centrage des bords de la virole et donc de l'ensemble de celle-ci, indépendamment de sa position axiale. On comprendra aisément que l'invention, en dissociant les moyens de centrage axial et de centrage radial, permet d'assurer le meilleur positionnement possible de la virole par rapport à l'ensemble de l'installation de coulée, quel que soit l'état de dilatation ou de bombé de la virole.

D'autre part, comme la virole n'est pas fixée rigidement sur le moyeu dans la zone médiane, aucune surépaisseur et aucun usinage spécifique à cette fixation ne sont nécessaires. Ainsi la section de la virole est plus régulière sur toute sa largeur, ce qui réduit les risques de déformation irrégulière de sa surface lors de sa dilatation.

Selon une disposition particulière de l'invention, les moyens de centrage conique comportent deux flasques centrés et coulissant sur le moyeu avec un jeu le plus réduit possible, ce coulissement étant assuré grâce à un moyen tel que résine de glissement ou palier du type à film d'huile. Chaque flasque comportent une partie tronconique qui coopère avec un alésage de forme générale tronconique ménagé sur le bord correspondant de la virole et des moyens élastiques de rapprochement des deux flasques l'un vers l'autre.

Préférentiellement, ces moyens de rapprochement comprennent des moyens de liaison élastiques des deux flasques, indépendants du moyeu et de la virole. Ainsi les efforts exercés par ces flasques sur les bords de la virole sont égaux, ce qui garantit une symétrie parfaite des efforts exercés sur la virole.

Selon une disposition particulière de l'invention, destinée à assurer la liaison en rotation de la virole sur le moyeu, le cylindre comporte des moyens de pression pour exercer un effort axial sur les moyens de butée, de manière que le frottement de la virole sur le moyeu au niveau des moyens de butée soit suffisant pour assurer, au moins en partie, l'entraînement en rotation de la virole par le moyeu.

Selon une autre disposition, qui peut se substituer ou s'ajouter à l'utilisation des dits moyens de pression, les flasques sont liés en rotation au moyeu, et, grâce à cette liaison en rotation et à la liaison par friction des bords de la virole sur les dits flasques, ceux-ci transmettent, au moins partiellement, le couple de rotation du moyeu à la virole.

Préférentiellement, l'une au moins des surfaces coniques en contact de la virole et des flasques présente à froid, au niveau des extrémités frontales de la virole, un détalonnement réalisé de manière que, au niveau de ce détalonnement, les dites surfaces coniques soient espacées l'une de l'autre à froid, et se rapprochent l'une de l'autre à chaud, lorsque la virole est soumise à l'effet de bombé thermique.

Cette disposition permet de conserver, ou même d'accroître, la superficie de contact des dites surfaces coniques lors de la déformation de la virole par bombé thermique. En effet si ces surfaces coniques de la virole et du flasque sont exactement de même conicité et de génératrice parfaitement rectiligne à froid, il se produit, lors du bombé thermique de la virole, une déformation essentiellement localisée sur les bords de la virole, qui tend à faire pivoter les dits bords sur eux-même, avec pour effet de réduire la conicité des surfaces coniques de la virole. Il s'ensuit que le contact conique entre virole et flasque tend à se réduire à un contact linéique circulaire, juste au niveau des extrémités frontales de la virole. Ce contact réduit est défavorable au bon centrage axial et au bon entraînement en rotation de la virole.

Le détalonnement prévu par l'invention permet d'éviter cette réduction de la zone de contact en déplaçant, lors de la déformation en bombé, cette zone de contact vers les extrémités de bord de la virole, mais sans pour autant entraîner un décollement des surfaces coniques dans leur zone de contact plus proche du plan médian du cylindre ou, tout au moins, en minimisant ce décollement.

Cet effet sera mieux compris, et d'autres caractéristiques et avantages de l'invention apparaîtront dans la description qui va être faite à titre d'exemple, d'un cylindre de coulée d'une installation de coulée continue entre cylindre de produits minces en acier.

On se reportera aux dessins annexés dans lesquels :
- la figure 1 est une vue, en demi-coupe selon un plan radial, du cylindre de coulée,
- la figure 2 est une vue à échelle agrandie, de la zone A, cerclée sur la figure 1,
- la figure 3 est une vue en coupe partielle selon la ligne III - III de la figure 2,
- la figure 4 est une vue simplifiée du cylindre montrant la position relative de la virole, des flasques et du moyeu, à froid,
- la figure 5 est une vue similaire à celle de la figure 4, à chaud, lors du bombé thermique de la virole.

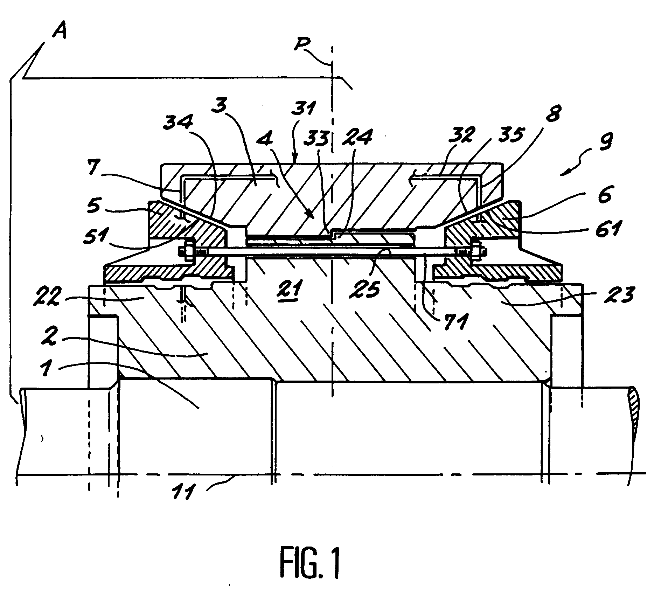

Le cylindre de coulée, représenté sur la figure 1, comporte :
- un arbre 1 relié à un mécanisme d'entraînement en rotation, non représenté,
- un moyeu 2 lié rigidement à l'arbre 1, par exemple par frettage et/ou clavetage, et usiné après montage sur l'arbre, coaxialement à celui-ci,
- une virole 3, en matériau bon conducteur de la chaleur, tel que du cuivre ou un alliage de cuivre, coaxiale au moyeu 2, et qui constitue un élément démontable et interchangeable du cylindre,
- des moyens de liaison axiale de la virole sur le moyeu, comportant des moyens 4 de butée axiale,
- des moyens de support et de centrage de la virole 3 sur le moyeu 2, comportant notamment des flasques 5, 6 interposés entre le moyeu 2 et les bords de la virole, et
- des moyens de liaison en rotation de la virole sur le moyeu, constitués comme on le verra par la suite, d'une part par les flasques 5, 6 et leurs moyens d'assemblage et, d'autre part par les moyens 4 de butée axiale et des moyens de pression sur cette butée.

La virole 3 comporte, à proximité de sa surface externe 31, des canaux de refroidissement 32 reliés à leurs extrémités à des canaux 7, 8 d'alimentation et de retour d'un circuit général, non représenté, de circulation d'un fluide de refroidissement. Un tel circuit est décrit par exemple dans le document FR-A-2 654 372 précité.

Le moyeu 2 comporte une partie médiane 21 de plus grand diamètre que ses parties d'extrémité axiales 22, 23. La partie médiane 21 du moyeu 2 comporte un épaulement 24, situé dans un plan P sensiblement médian du cylindre, et orthogonal à son axe 11.

La virole 3 comporte, à l'intérieur, un épaulement 33 correspondant, et donc situé également dans le plan P.

Le centrage, selon la direction de l'axe 11, de la virole 3 sur le moyeu 2 est assuré par appui de l'épaulement 33 de la virole sur l'épaulement 24 du moyeu, ce qui définit précisément le positionnement de la virole par rapport au moyeu et donc par rapport à l'ensemble de l'installation de coulée. La symétrie de position de la virole par rapport au plan médian du cylindre est ainsi assurée et conservée même lorsque la virole se dilate axialement en cours de coulée, les déplacements des bords de la virole, provoqués par cette dilatation, s'effectuant de manière symétrique par rapport au dit plan médian.

Le centrage radial de la virole sur le moyeu est assuré par un système 9 de centrage conique élastique agissant uniquement sur les bords de la virole.

Ce système de centrage est constitué des deux flasque 5, 6, centrés sur les parties d'extrémités 22, 23 du moyeu et coulissant pratiquement sans jeu sur celles-ci. Chaque flasque comporte une partie tronconique 51, 61 qui coopère avec un alésage 34, 35 de forme également tronconique de même conicité, réalisé sur les bords de la virole 3.

Les flasques 5, 6 sont tirés l'un vers l'autre par des moyens de rapprochement élastiques, agissant selon la direction axiale du cylindre pour appuyer les parties tronconiques 51, 61 des flasques contre les alésages tronconiques 34, 35 de la virole, de manière à assurer son centrage et le supportage de ses bords. Il est à noter que le contact conique entre la virole et les flasques n'est assuré que sur les bords de la virole. Le centrage radial de la virole sur le moyeu est donc assuré essentiellement par les bords de la virole, ce qui, ainsi que cela sera expliqué plus en détail par la suite, permet de conserver ce centrage même lorsque la partie médiane de la virole s'écarte, à chaud, du moyeu, sous l'effet du bombé thermique de dilatation.

Les moyens de rapprochement élastique des flasques peuvent consister en des moyens de traction des flasques vers la partie médiane 21 du moyeu, agissant indépendamment sur chaque flasque.

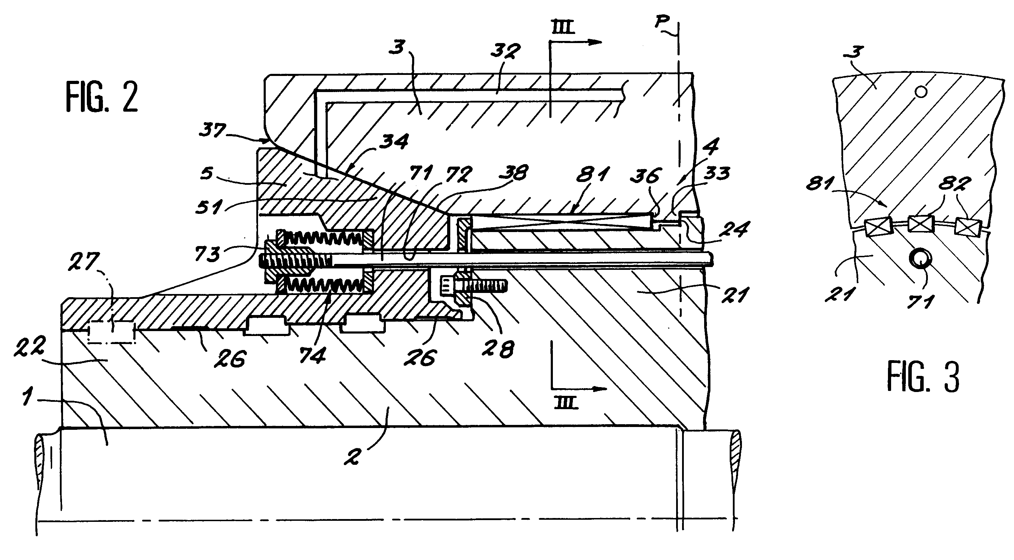

Préférentiellement, ainsi que représentés sur la figure 1, ces moyens de rapprochement comprennent des moyens de liaison élastique des flasques entre eux, constitués par un système de tirants 71 répartis circonférentiellement, qui relient les flasques en passant librement dans les alésages 25 forés dans la partie médiane 21 du moyeu. En se reportant à la figure 2, on voit que ces tirants 71 passent dans des orifices 72 des flasques 5, 6 et portent à leurs extrémités des écrous de réglage 73.

Des éléments élastiques, tels que par exemple des rondelles élastiques 74, sont placés entre l'écrou 73 et le flasque 5, de manière à exercer un effort de traction des flasques d'un vers l'autre tout en autorisant leur écartement. L'effort de traction est réglé, par les écrous 73, de manière à appliquer les flasques contre les alésages coniques de la virole avec un effort suffisant pour empêcher un glissement en rotation, mais autoriser un léger glissement selon la direction axiale, lorsque, à chaud, les dimensions de l'alésage conique varient suite à la dilatation de la virole.

L'effort de rapprochement des flasques l'un vers l'autre peut aussi être fourni par un système de vérins et peut alors être ajusté avant ou même en cours de coulée en fonction des conditions de coulée (flux thermique à extraire, déformations de la virole, etc...).

Les flasques 5,6 sont réalisés en un matériau ayant de bonnes qualités de frottement, une bonne résistance à la corrosion et des caractéristiques de résistance mécanique élevées, par en exemple bronze d'aluminium ou un alliage similaire.

La conicité de la partie conique est déterminée de manière à assurer la réversibilité des déplacements relatifs flasque-virole, c'est-à-dire que d'une part les flasques doivent pourvoir se rapprocher l'un de l'autre lors de la dilatation radiale de la virole, et d'autre part une contraction radiale des bords de la virole doit avoir pour effet de repousser les flasques, en comprimant les rondelles élastiques 74.

La conicité sera donc déterminée en fonction des caractéristiques de frottement à l'interface virole - flasque et de l'effort exercé sur les flasques, de manière à minimiser l'hystérésis entre dilatation et rétreint, c'est-à-dire que lors du retour du cylindre dans un état donné des conditions thermiques, la position des flasques soit aussi exactement que possible la même que celle qu'ils avaient précédemment dans le même état, quels que soient les déplacements intervenus entre temps.

On comprend donc aisément que la conicité devra être suffisante pour éviter un blocage des flasques dans la virole, tout en étant suffisamment faible pour que les flasques ne s'écartent pas sous les efforts générés par la pression exercée par le produit en cours de coulée.

Le centrage des flasques 5, 6 sur les parties 22, 23 d'extrémité axiale du moyeu 2 est assuré par de la résine de glissement 26 injectée entre les flasques et le moyeu, ou par d'autres moyens tels que roulements ou joint d'huile permettant de réduire au maximum le jeu entre moyeu et flasque, par exemple de l'ordre de 0,05 mm sur le diamètre, tout en conservant de bonnes qualités de glissement axial des flasques sur le moyeu, pour éviter des grippages et des perturbations consécutives dans les mouvements des flasques.

Pour assurer la transmission du couple d'entraînement en rotation entre le moyeu et les flasques, on peut utiliser un système de liaison en rotation par exemple des clavettes. Préférentiellement cependant, les flasques sont reliés au moyeu par une liaison assurant la continuité du passage du couple, symbolisée en 27, du type "Flexacier" par exemple, tout en autorisant une liberté de translation dans la direction axiale.

Ainsi, la transmission du couple d'entraînement du moyeu à la virole est assuré par ce système de liaison entre le moyeu et les flasques, et par frottement entre les flasques et la virole.

La transmission du couple par les moyens indiqués ci-dessus est préférentiellement complétée par un entraînement par friction au niveau des épaulements du moyeu 24 et de la virole 33.

A cette fin, le cylindre comporte des moyens de pression pour appuyer l'épaulement 33 de la virole sur l'épaulement 24 du moyeu. Ces moyens comportent une bride élastique 28 fixée sur le moyeu 2 et s'appuyant sur la virole par l'intermédiaire d'une ou plusieurs entretoises 81. Cette entretoise peut être une bague continue placée entre la virole 3 et la partie centrale 21 du moyeu 2.

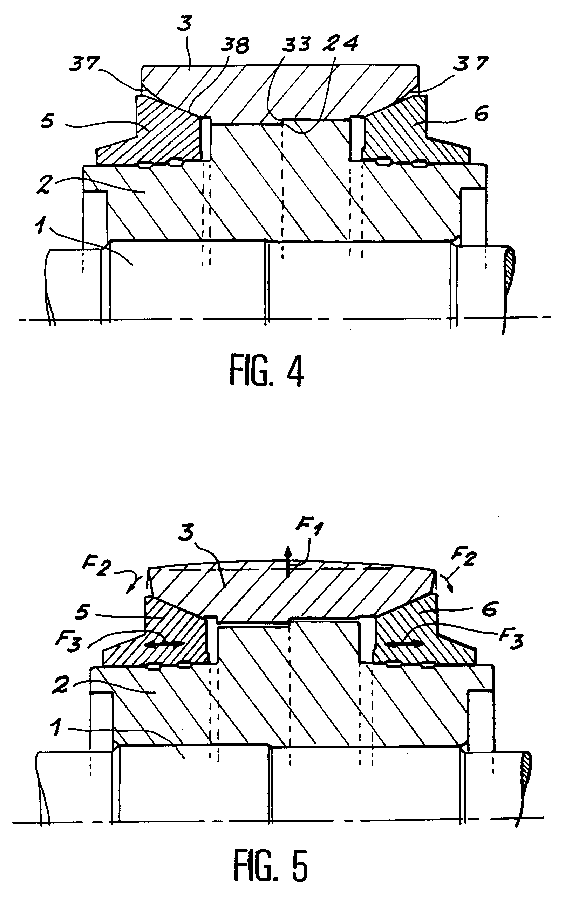

Préférentiellement, ainsi que représentée sur la figure 3, l'entretoise 81 peut être segmentée et former ainsi une pluralité de pièces de poussée indépendantes 82 en forme de tuiles placées dans des rainures longitudinales réalisées à l'interface entre virole et moyeu. De cette manière, on peut conserver, au moins à froid, un contact entre la virole et le moyeu, qui assure un centrage complémentaire de la virole.

Ces pièces de poussée sont appuyées contre un second épaulement 36 de la virole, aménagé à proximité de l'épaulement 33 et opposé à celui-ci. Ces dispositions permettent de donner à la virole une forme continue de section régulière sur toute sa largeur, ce qui permet de minimiser ses déformations à chaud en les rendant symétriques par rapport au plan médian P.

Comme on l'a vu précédemment, le supportage et le centrage radial de la virole est essentiellement réalisé par les flasques 5, 6. Pour assurer un appui constant de la virole sur les parties coniques 51, 61 des flasques, même lors de déformation de bombé de la virole, un détalonnement 37 est prévu sur le bord extérieur des alésages coniques de la virole, de manière que la virole reste en appui sur les flasques dans la zone 38 de ceux-ci située vers le milieu du cylindre, là où les déformations de bombé et de circularité sont faibles (inférieures à 0,1 mm), et que lorsque les bords de la virole sont soumis à une contrainte tendant à les rapprocher de l'axe du cylindre, soit sous l'effet de bombé thermique, soit sous la pression exercée par le produit coulé, la partie détalonnée de la virole vienne progressivement en appui sur le flasque, augmentant la longueur de la portée conique.

En relation avec les figures 4 et 5, on va maintenant décrire le comportement de la virole lors de l'utilisation du cylindre.

La figure 4 représente schématiquement la forme et la position de la virole à froid. La virole est alors en appui et centrée sur les flasques 5, 6.

Lors de la coulée, la virole s'échauffe et se dilate (selon la flèche F1) en formant un bombé thermique (voir figure 5). La partie médiane de la virole s'écarte radialement du moyeu, mais le contact de butée axiale entre l'épaulement 33 de la virole et l'épaulement 24 du moyeu est conservé. La portée et le centrage de la virole sont toujours assurés par les flasques.

Au fur et à mesure de la montée en température, les bords de la virole ont tendance à pivoter sur eux-même (flèche F2), et, ce faisant, à venir appuyer les parties détalonnées de la virole sur les parties coniques des flasques, sans que cela conduise à une perte de contact dans la zone 38 de la partie conique, le profil exact du détalonnement ayant été préalablement déterminé par un modèle de calcul de la déformation à chaud des viroles.

Lors de ces diverses déformations de la virole, les flasques subissent des déplacements selon les flèches F3, pour s'adapter en permanence aux variations dimensionnelles de la virole.

L'invention n'est pas limitée aux dispositions décrites ci-dessus à titre d'exemple.

En particulier, au lieu de localiser le détalonnement de la virole au bord externe de l'alésage conique de la virole, celui-ci pourra s'étendre sur une plus grande longueur de la partie conique, en le réalisant par exemple sous forme d'une portée torique de très grand rayon. Ainsi la génératrice de l'alésage conique de la virole, au lieu d'être rectiligne sur toute sa longueur, est une courbe de grand rayon qui, lors des déformations de la virole par bombé thermique, se développe en roulant sur la partie conique du flasque et en tendant vers une droite, accroît la longueur du contact conique.

L'invention s'applique aussi aux cylindres de coulée pour la coulée continue de produits métalliques minces sur un seul cylindre.

## Revendications

1. Cylindre de coulée pour une installation de coulée continue des métaux sur un ou entre deux tels cylindres, ce cylindre comportant un moyeu (2) et une virole (3) disposés coaxialement, des moyens de liaison de la virole et du moyeu, comprenant des moyens de liaison axiale et des moyens de liaison en rotation, et des moyens de support et de centrage radial de la virole sur le moyeu,
caractérisé en ce que les moyens de liaison axiale comportent des moyens (4) de butée axiale de la virole sur le moyeu, situés dans un plan (P) sensiblement axialement médian du cylindre, et les moyens de centrage comportent des moyens (34, 51, 35, 61) de centrage conique élastique uniquement des bords de la virole par rapport au moyeu.

2. Cylindre selon la revendication 1, caractérisé en ce que les moyens de centrage conique comportent deux flasques (5, 6) centrés et coulissant sur le moyeu (2), chaque flasque comportant une partie tronconique (51, 61) qui coopère avec un alésage (34, 35) de forme générale tronconique ménagé sur le bord correspondant de la virole (3) et des moyens (71, 73, 74) de rapprochement élastiques des deux flasques l'un vers l'autre.

3. Cylindre selon la revendication 2, caractérisé en ce que les moyens de rapprochement comprennent des moyens (71, 73, 74) de liaison élastiques des deux flasques, indépendants du moyeu et de la virole.

4. Cylindre selon la revendication 1, caractérisé en ce que le cylindre comporte des moyens de pression (28, 81) pour exercer un effort axial sur les moyens de butée (4).

5. Cylindre selon la revendication 1, caractérisé en ce que les moyens de butée (4) comportent un épaulement (24) du moyeu en appui sur un épaulement (33) de la virole.

6. Cylindre selon la revendication 4, caractérisé en ce que les moyens de pression comportent une bride élastique (28) et une entretoise (81) placée entre la virole (3) et le moyeu (2), et appliquée contre un épaulement (36) opposé à l'épaulement (33) par la dite bride (28).

7. Cylindre selon la revendication 6, caractérisé en ce que l'entretoise (81) est segmentée par plusieurs pièces de poussée (82) indépendantes placées dans des rainures longitudinales réalisées à l'interface entre virole et moyeu.

8. Cylindre selon la revendication 1, caractérisé en ce que les flasques (5, 6) sont liés en rotation au moyeu (2).

9. Cylindre selon la revendication 1, caractérisé en ce que l'une au moins des surfaces coniques (34, 51) en contact de la virole (3) et des flasques (5, 6) présente à froid, au niveau des extrémités frontales de la virole, un détalonnement (37) réalisé de manière que, au niveau de ce détalonnement, les dites surfaces coniques soient espacées l'une de l'autre.

10. Cylindre selon la revendication 3, caractérisé en ce que les moyens de liaison élastique des flasques (5, 6) comprennent des tirants (71) et des éléments élastiques (74).

## Claims

1. Casting roll for a plant for continuous casting of metals on or between two rolls of this type, this roll including a hub (2) and a shell (3) which are arranged coaxially, means for connecting the shell and the hub, comprising axial connection means and rotational connection means, and means for supporting and radially centring the shell on the hub,
characterized in that the axial connection means include means (4) for axial abutment of the shell on the hub, which means are located in a plane (P) which is substantially axially central to the roll, and the centring means include means (34, 51, 35, 61) for elastic conical centring solely of the edges of the shell with respect to the hub.

2. Roll according to Claim 1, characterized in that the means for conical centring include two flanges (5, 6) which are centred and slide on the hub (2), each flange including a frustoconical part (51, 61) which cooperates with a bore (34, 35) of frustoconical general shape formed on the corresponding edge of the shell (3), and elastic means (71, 73, 74) for moving the two flanges towards each other.

3. Roll according to Claim 2, characterized in that the means for moving the flanges towards each other comprise elastic means (71, 73, 74), independent of the hub and the shell, for connecting the two flanges.

4. Roll according to Claim 1, characterized in that the roll includes pressure means (28, 81) for exerting an axial force on the abutment means (4).

5. Roll according to Claim 1, characterized in that the abutment means (4) include a hub shoulder (24) bearing on a shell shoulder (33).

6. Roll according to Claim 4, characterized in that the pressure means include an elastic bracket (28) and an insert (81) which is placed between the shell (3) and the hub (2) and is applied by the said bracket (28) against a shoulder (36) on the opposite side from the shoulder (33).

7. Roll according to Claim 6, characterized in that the insert (81) is segmented by a plurality of independent thrust parts (82) placed in longitudinal grooves made at the interface between the shell and the hub.

8. Roll according to Claim 1, characterized in that the flanges (5, 6) are connected in rotation to the hub (2).

9. Roll according to Claim 1, characterized in that, when cold, at least one of the conical surfaces (34, 51) in contact with the shell (3) and the flanges (5, 6) has, at the front ends of the shell, a relief (37) formed in such a way that, at this relief, the said conical surfaces are spaced apart from each other.

10. Roll according to Claim 3, characterized in that the means for elastic connection of the flanges (5, 6) comprise tie rods (71) and elastic elements (74).

## Patentansprüche

1. Gießwalze für eine Anlage zum Stranggießen von Metallen auf einer oder zwischen zwei solchen Walzen, wobei diese Walze eine Nabe (2) und einen Mantel (3), die koaxial angeordnet sind, Mittel zur Verbindung des Mantels mit der Nabe, welche Mittel zur axialen Verbindung und Mittel zur drehfesten Verbindung beinhalten, und Mittel zum Abstützen und zur radialen Zentrierung des Mantels auf der Nabe umfaßt,
dadurch gekennzeichnet, daß die Mittel zur axialen Verbindung Mittel (4) für den axialen Anschlag des Mantels auf der Nabe umfassen, die sich in einer im wesentlichen axial in der Mitte gelegenen Ebene (P) der Walze befinden, und die Zentrierungsmittel Mittel (34, 51, 35, 61) zur elastischen konischen Zentrierung nur der Ränder des Mantels in bezug auf die Nabe umfassen.

2. Walze nach Anspruch 1, dadurch gekennzeichnet, daß die Mittel zur konischen Zentrierung zwei Flansche (5, 6) umfassen, die auf der Nabe (2) zentriert sind und gleiten, wobei jeder Flansch einen kegelstumpfförmigen Teil (51, 61), der mit einer Bohrung (34, 35) von kegelstumpfartiger Grundform zusammenwirkt, die am entsprechenden Rand des Mantels (3) vorgesehen ist, und elastische Mittel (71, 73, 74) zur gegenseitigen Annäherung der beiden Flansche aufweist.

3. Walze nach Anspruch 2, dadurch gekennzeichnet, daß die Annäherungsmittel Mittel (71, 73, 74) zur elastischen Verbindung der beiden Flansche umfassen, die von der Nabe und vom Mantel unabhängig sind.

4. Walze nach Anspruch 1, dadurch gekennzeichnet, daß die Walze Druckmittel (28, 81) aufweist, um auf die Anschlagmittel (4) eine axiale Kraft auszuüben.

5. Walze nach Anspruch 1, dadurch gekennzeichnet, daß die Anschlagmittel (4) eine Schulter (24) der Nabe umfassen, die auf einer Schulter (33) des Mantels aufliegt.

6. Walze nach Anspruch 4, dadurch gekennzeichnet, daß die Druckmittel einen elastischen Flansch (28) und ein Distanzstück (81) umfassen, das zwischen dem Mantel (3) und der Nabe (2) angeordnet ist und von dem Flansch (28) gegen eine der Schulter (33) gegenüberliegende Schulter (36) gedrückt wird.

7. Walze nach Anspruch 6, dadurch gekennzeichnet, daß das Distanzstück (81) durch mehrere separate Schubstücke (82), die in Längsnuten angeordnet sind, welche an der Grenzfläche zwischen Mantel und Nabe vorgesehen sind, in Segmente unterteilt wird.

8. Walze nach Anspruch 1, dadurch gekennzeichnet, daß die Flansche (5, 6) drehfest mit der Nabe (2) verbunden sind.

9. Walze nach Anspruch 1, dadurch gekennzeichnet, daß wenigstens eine der sich berührenden konischen Flächen (34, 51) des Mantels (3) und der Flansche (5, 6) im kalten Zustand in Höhe der stirnseitigen Enden des Mantels eine Hinterschneidung (37) aufweist, die so angelegt ist, daß die besagten konischen Flächen in Höhe dieser Hinterschneidung voneinander beabstandet sind.

10. Walze nach Anspruch 3, dadurch gekennzeichnet, daß die Mittel zur elastischen Verbindung der Flansche (5, 6) Zugstangen (71) und elastische Elemente (74) umfassen.
